# EUROPEAN PATENT SPECIFICATION

(11) **EP 1 744 862 B1**
(45) Date of publication and mention of the grant of the patent: **01.10.2008**
(21) Application number: 05733752.9
(22) Date of filing: 05.04.2005
(51) Int. Cl.: B29C 33/50, B29C 70/44

(54) **METHOD AND APPARATUS FOR MANUFACTURE OF A PRODUCT FROM COMPOSITE MATERIAL**
VERFAHREN UND VORRICHTUNG ZUR HERSTELLUNG EINES PRODUKTS AUS VERBUNDMATERIAL
PROCEDE ET APPAREIL DE FABRICATION D'UN PRODUIT A PARTIR DE MATERIAU COMPOSITE

(30) Priority: 16.04.2004 NL 1025960
(43) Date of publication of application: 24.01.2007
(73) Proprietor: Spectralyte Research & Development B.V., 8923 CK Leewarden (NL)
(72) Inventor: MIEDEMA, Andries, Jan, NL-8923 CK Leeuwarden (NL)
(74) Representative: Grootscholten, Johannes A.M.
(86) International application number: PCT/NL2005/000252
(87) International publication number: WO 2005/099989

(56) References cited:
- DE-A- 3 509 634
- FR-A- 2 638 672
- NL-A- 284 555

## Description

The present invention relates to a method and an apparatus for impregnating a layer of fibre material with a curable liquid so as to obtain a product of composite material, in particular an upright such as a lamppost or a light mast, or a post for a traffic light or a post for a road sign, hollow transport conduits and so on.

Such a method and apparatus are generally known for forming products from composite material, such as windmill vanes, ship's hulls etc. The fibre material can here be impregnated in diverse ways with the curable liquid, more particularly a resin, wherein in all the cases known to the inventors use is made of a form-retaining mould part against which a layer of fibre material is arranged prior to impregnation thereof with the liquid.

The know techniques have a number of drawbacks. It is thus practically impossible to produce round, hollow or cylindrically hollow objects without first forming intermediate products which, when connected together, can form the whole, finally desired product. Two seams will be thus located for instance diametrically opposite each other along lampposts and flagpoles over the full length thereof where the semi-cylindrical intermediate products are fixed to each other in order to obtain the final product such as the lamppost or the flagpole.

It is noted that, in any case in terms of strength and collision-resistance in the case of lampposts as the products for manufacturing, this provides an insufficiently strong product. This is why manufacturers of products, where the rigidity and strength of the products for manufacturing are very important factors, have in the past always chosen to manufacture these products from steel, aluminium etc. Although flagpoles of composite material are known, the requirements in respect of for instance strength and collision-resistance are hardly a factor. A flagpole may moreover bend in the wind, which for a lamppost is wholly undesirable.

From NL-284.555 a method and a production apparatus in accordance with the preambles of claims 1 and 10 respectively are known, wherein a rigid mould is used for the manufacture of products, in combination with a flexible counterpart or core. The mould is in each disclosure essentially rigid in that the shape thereof as well as the shape of resulting product -at least the surface of that product corresponding with the mould- is determined by in practice and essentially only the mould itself.

It is the object of the invention to provide a method and an apparatus with which many new fields of application for composite material can be opened up, since products obtained with the method and the apparatus according to the invention display improved properties in all respects. The method and the apparatus for manufacturing such products from composite material are thus defined in the independent claims 1 and 10.

The objectives of the present invention are achieved with the method and apparatus.

With a method as according to the invention the final form of the product for manufacture is substantially defined by the combined action of the flexible element and the pressure body which brings the flexible element into the desired form. As a result of this combined action it is very readily possible to properly define a desired form of the final product. This takes place without making use of an expensive, form-retaining mould.

Deploying of the flexible element herein comprises: providing the flexible element in a predetermined flat form and closing the flexible element around the pressure body while enclosing the layer of fibre material by connecting the selected sides or edges of the flexible element to each other. In such an embodiment a wide diversity of designs of the product to be finally manufactured can be realized.

The method according to the present invention has many preferred embodiments and specific features, which are defined in the dependent claims 2-9.

According to claim 2 such a pressure body is inflatable and the step of deploying the flexible element comprises of inflating the pressure body. While the element, which in fact forms the mould, is flexible it is as little stretchable as possible, so that inflating of the pressure body has the result that the shaping of the flexible element is still decisive in defining the form of the product to be finally manufactured.

If for instance the flat form of the flexible element is that of a parallelepiped, a cylindrical or conical product such as a lamppost or a flagpole can be realized in simple manner with mutually connecting sides or edges of the flexible element which lie opposite each other. It can be advantageous here if the pressure body is a substantially or approximately cylindrical elongate bag. The elongate bag then defines the hollow space in the interior of the product to be finally manufactured.

It is further possible that connecting of the sides or edges of the flexible element comprises of: arranging clamping means along these sides or edges and closing the clamping means. The flexible element is thus closed around the pressure body while enclosing the layer of fibre material to enable this latter to be then impregnated.

Alternatively or additionally to the clamping means, other random closing means can also be arranged at sides or edges of the flexible element. These serve to close at the free edges or sides of the flexible element the space in which the layer of fibre material is received, so that an underpressure can be realized therein.

The clamping means can be connected via at least one coupling to a frame, wherein the method further comprises of disconnecting the coupling with the liquid in a still uncured state after the impregnation and removing the clamping means from the frame for further treatment, for instance a heat treatment, of the layer of liquid-impregnated fibre material in order to provide the product. The frame can thus be reused almost immediately after impregnation of the layer of fibre material when in a continuous process new couplings and clamping means and a new flexible element are brought into connection with the frame. The flexible element used immediately prior to this as mould for a preceding product is subjected in the deployed state to for instance a heat treatment to bring about curing of the curable liquid, for which purpose the frame does not remain "occupied" but is therefore immediately available for a subsequent production process.

Finally, it is noted that it is possible in the context of the present invention to arrange a location with a hatch or cover form between the flexible element and the layer of fibre material in order to define at least a contour of an access opening in the outer surface of the product. Such an access opening can, in the case of a lamppost, be a hole for closing with a cover through which access can be gained to the electrical cables in the interior of the lamppost. In the case of a flagpole such an access hatch can be used to operate lines or cables extending in the interior of the flagpole.

An apparatus according to the present invention has the means for performing at least the steps defined in the independent claim 1. Such an apparatus preferably also has means for implementing steps defined in the dependent claims 2-9.

The invention will be further elucidated hereinbelow on the basis of a preferred embodiment thereof, which is shown in the accompanying drawings but to which the present invention is not limited, wherein in the various drawings the same reference numerals are used for the same or similar parts and components, and in which:
fig. 1 shows a side view of a lamppost as possible embodiment of a product as end product of a method according to the present invention produced with a corresponding apparatus;
fig. 2 is a perspective view of a section II of the lamppost shown in fig. 1;
fig. 3 is a view elucidating the method according to the present invention;
fig. 4 shows a perspective view of an apparatus as possible embodiment of the present invention;
fig. 5 shows the apparatus of fig. 4 in operation;
fig. 6 shows a cross-sectional view of a detail designated with VI of clamping means of the apparatus of fig. 5;
fig. 7 is a perspective view of the basic operation of the present invention;
fig. 8 shows schematically an automated production process; and
fig. 9 shows an alternative of particularly the embodiment of fig. 6 with engaging means therein.

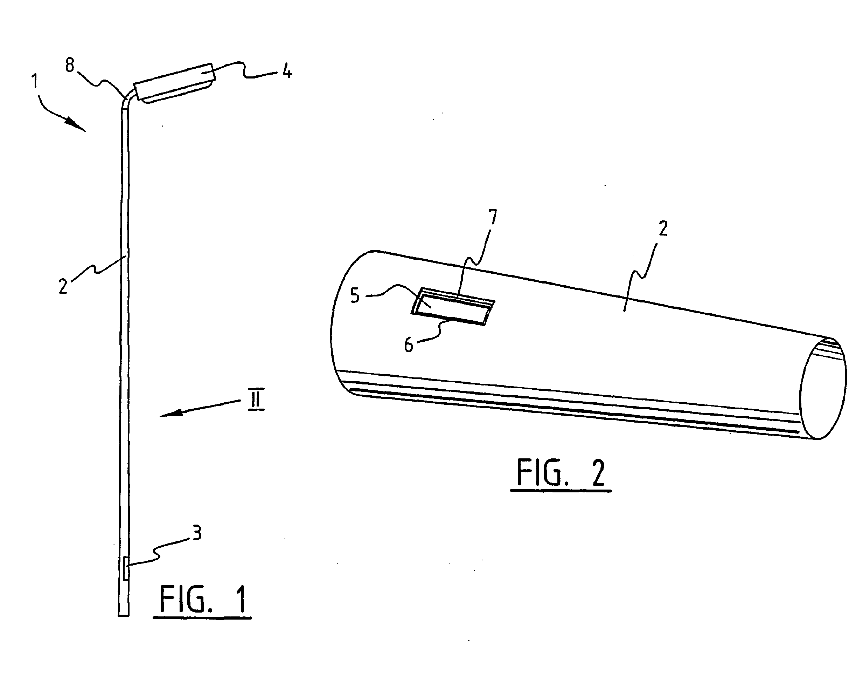

The embodiment shown in fig. 1 of a lamppost 1 of a product which can be obtained with a method and an apparatus according to the present invention comprises an upright 2 having therein an access opening closed by a cover 3, and further a lamp fixture 4. The upright 2 in particular can be obtained with a method and an apparatus according to the present invention. The upright 2 is shown in fig. 2. It is clearly shown that the upright 2 of fig. 2 has a cone shape, wherein it is noted that the view of fig. 2 is greatly compressed in the length direction of upright 2. Cover 3 is further removed in the view of fig. 2, which clearly shows that an access opening 5 lies behind cover 3. Access can be gained herethrough to wiring and the like located in upright 2. Access opening 5 is bounded by a flange 6 which connects to an edge 7 which in turn transposes into the outer surface of upright 2. Cover 3 of fig. 1 comes to lie against flange 6, and edge 7 has a thickness corresponding to that of cover 3. A practically flat outer surface without protruding parts or sharp edges can thus be obtained at the position of such a cover 3.

In fig. 1 a connecting piece 8 is used for the transition between upright 2 and lamp fixture 4. Lamp fixtures 4 and such connecting pieces 8 do not form specific subject-matter of the present invention which relates principally to the production of upright 2. Lamp fixture 4 and connecting piece 8 will therefore not be described further, the more so because they are constructions generally known in the art.

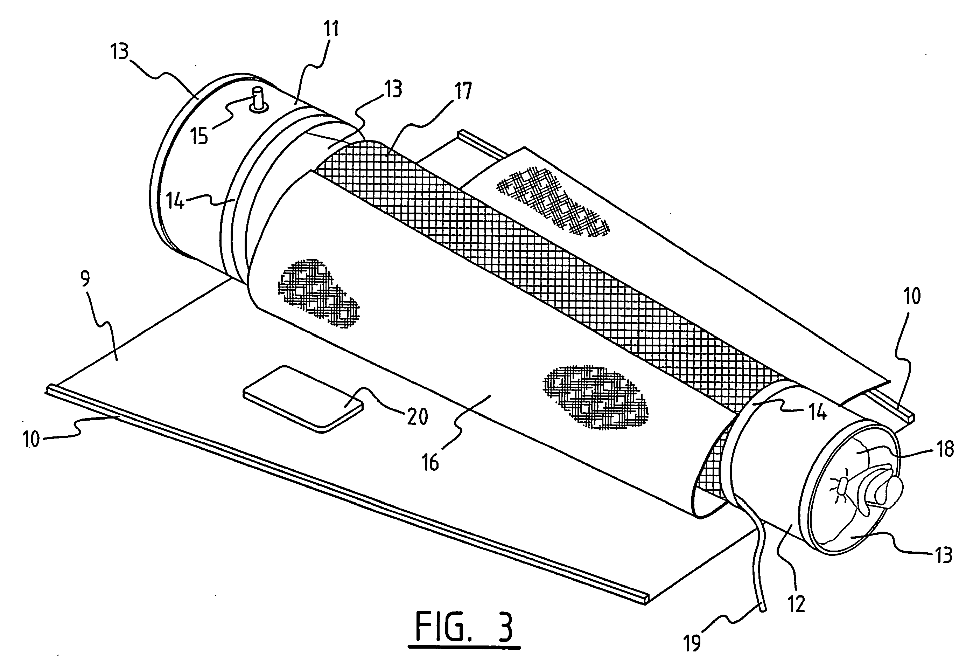

Fig. 3 shows schematically the production process for the upright shown in fig. 2. A trapezoidal piece of foil 9, for instance of mylar, is used here. Mounting slats 10 are arranged on two opposite edges of foil 9. Arranged on the sides without mounting slat 10 are cylinders 11, 12 forming closing means, between which a sleeve-like foil layer 13 extends which is trained round the outer edges of cylinders 11, 12 and fixed at that position, for instance using double-sided adhesive tape. Such tape is also used to fix foil 9 later in the production process and is designated in fig. 3 with reference numeral 14. When foil 9 is trained or rolled round cylinders 11, 12 it adheres to the double-sided adhesive tape 14 so that a space can be created between foil layer 13 and foil 9 with an underpressure or vacuum therein. Cylinder 11 comprises a connection 15 for connection thereto of a pump or the like to create an underpressure in this space between foil 9 and foil layer 13. In this space at least one layer of glass fibre material 16 is trained around foil layer 13 after a flow-enhancing gauze 17 per se known in the art has been arranged therearound. An inflatable bag as embodiment of a possible pressure body is preferably inflated to some extent prior to arranging the flow-enhancing gauze 17 and the layer of glass fibre material 16. The final form of upright 2 is thus obtained at least approximately, and the layers of the flow-enhancing gauze 17 and the layer of glass fibre material 16 can be arranged in convenient manner round foil layer 13. Foil 9 is then closed or trained therearound, wherein the edges of foil 9 without mounting slats 10 are thus engaged by double-sided adhesive tapes 14 and the edges of foil 9 with mounting slats 10 are connected to each other in the manner to be further described hereinbelow.

Further placed between the sleeve-like foil layer 13 and flow-enhancing gauze 17 is a hose 19 which at selected positions between tapes 14 comprises outflow openings for liquid for curing, in particular resin. Using flow-enhancing gauze 17 and as a result of the underpressure to be applied in the space between foil 9 and foil layer 13 such resin is well distributed through the layer of glass fibre material 16, this resin distribution taking place much more homogeneously and rapidly than if it were to take place manually using brushes. This is a per se known technique, for instance for vanes of windmills, wherein a form-retaining, rigid, hard mould was applied in this known art. Reference is made in this respect to the American patent 4,902,215, so that a further description of the mechanism of the resin distribution through the layer of glass fibre material 16 can be dispensed with.

It is further noted that a cover-like plate 20 is arranged between foil 9 and the layer of glass fibre material 16. Because the layer of foil 9 is flexible but not elastic, for which purpose a material such as mylar is for instance highly suitable, such a cover-like plate 20 leaves an impression in the layer of glass fibre material 16, this impression corresponding with edge 7 in fig. 2. The glass fibre material of layer 16 is not interrupted at the position of the cover-like plate 20 so as not to impede the distribution of the resin at the position of cover-like plate 20. After completion of upright 2 the access opening 5 can then be arranged with a saw.

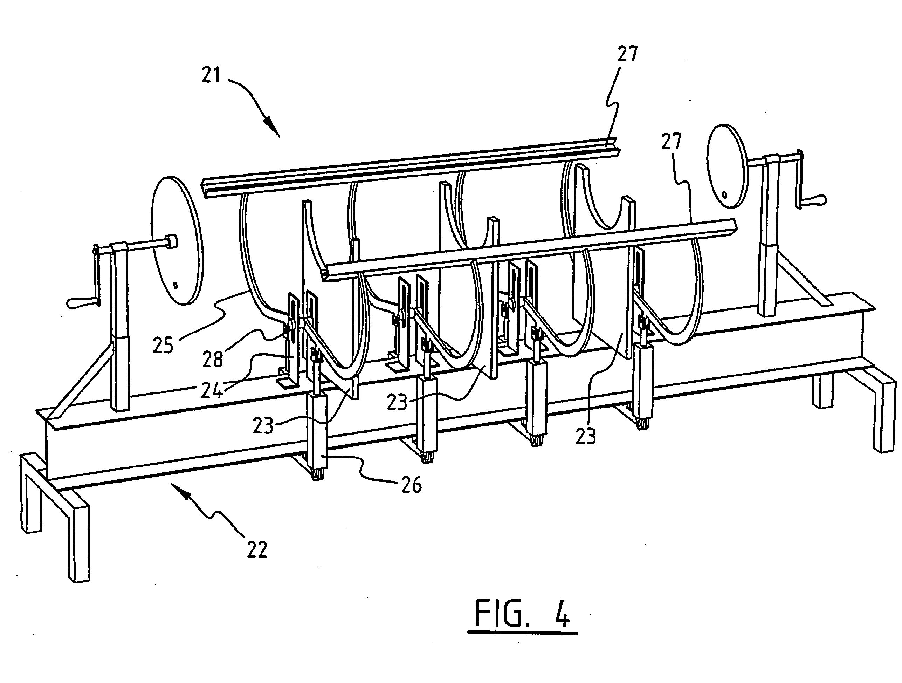

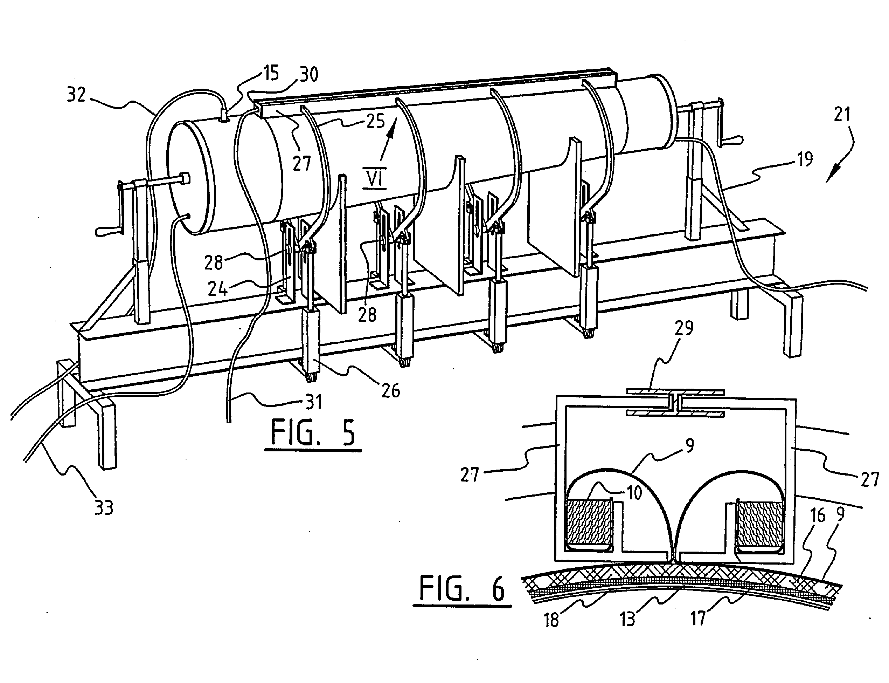

Fig. 4 shows an apparatus 21, or at least a portion thereof, for realizing at least the most essential steps of the method according to the invention as already substantially described above. Apparatus 21 comprises a frame 22. Shown as option thereon are partitions 23 which have an arcuate edge on the top in which the assembly, such as that of fig. 3, can be placed. Further arranged on frame 22 are brackets 24 on which arms 25 are pivotally mounted, these being pivotable through the action of cylinders 26. There are two sets of arms 25, each supporting a closing profile 27, wherein closing profiles 27 form clamping means for joining together the sides of foil 9 in fig. 3 on which mounting slats 10 are arranged. This is further shown in fig. 6.

It is noted that the height of the pivot points 28 of arms 25 on brackets 24 is adjustable for the purpose of effecting and setting the conical form of upright 2 in fig. 2 without measures or modifications to closing profiles 27. If the assembly of fig. 3 is placed in the apparatus of fig. 4, the arrangement is obtained as shown in fig. 5. Use is made here between closing profiles 27 of an H-shaped sealing profile 29 and caps 30 are arranged on the ends of closing profiles 27 to also allow underpressure to be created in the space enclosed by closing profiles 27 using for instance a hose connected to a pump. Arranged on connection 15 is a similar hose 32 which can likewise be connected to a pump or the like to provide underpressure in the space between foil 9 and the sleeve-like foil layer 13. A hose 33 is further also provided for inflating bag 18, an outer end of which is shown in fig. 3.

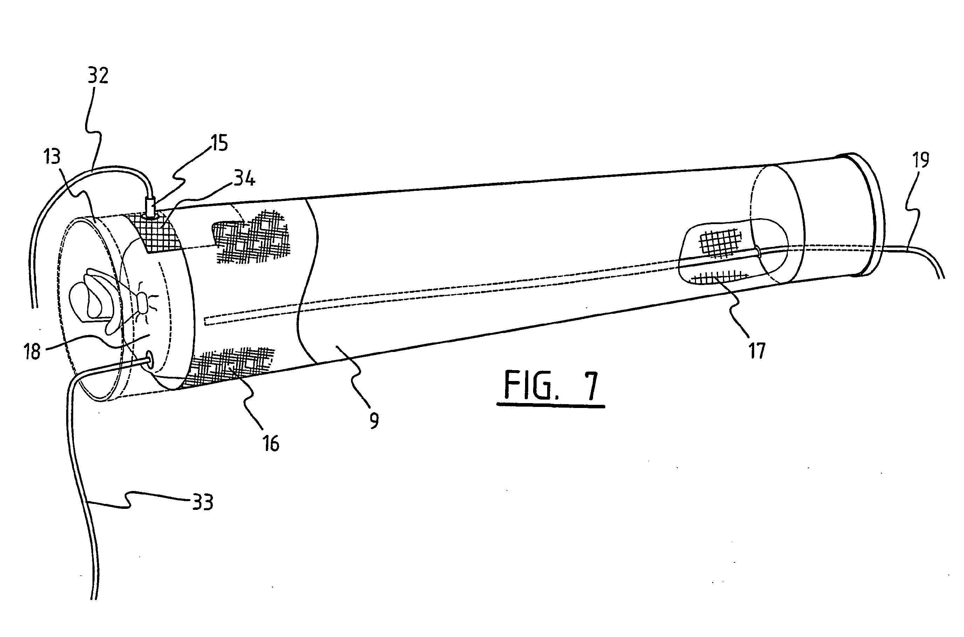

The bag is also shown in the view of fig. 7 which is substantially identical to the view of fig. 5, but then without apparatus 21. Additionally shown herein is that an extra piece 34 of flow-enhancing gauze 17 is arranged at the position of connection 15 so that connection 15 is not closed by foil layer 13 and the suction via hose 32 and connection 15 affects all air in the space enclosed by foil layer 13 and foil 9 where the layer of glass fibre material 16 is situated. Fig. 7 also shows that hose 19 extends under flow-enhancing gauze 17 over practically the whole length of the upright 2 to be formed.

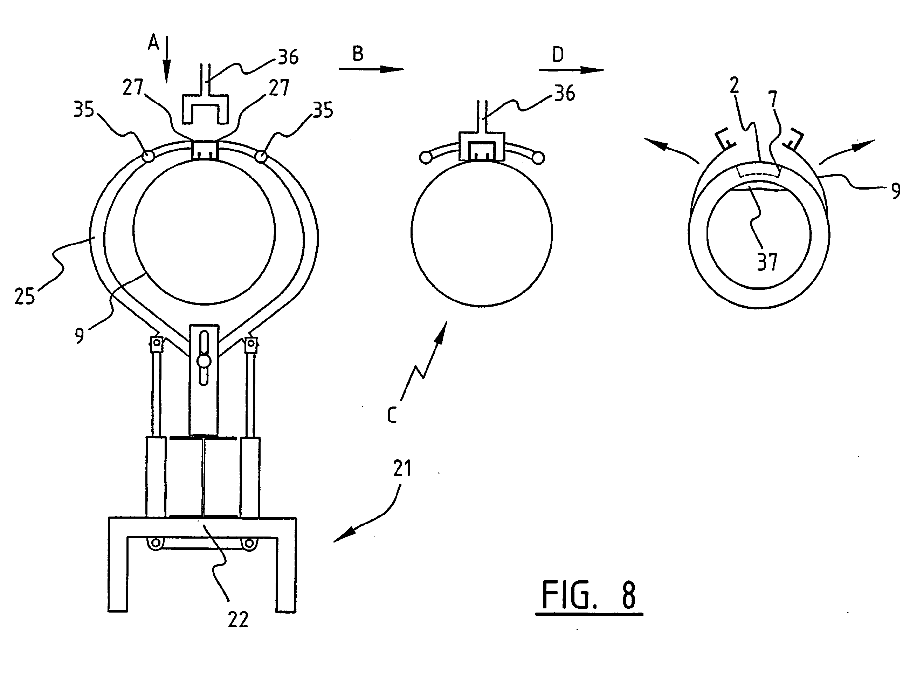

Fig. 8 shows schematically yet another embodiment of the method according to the present invention. Arranged here in arms 25 are coupling pieces 35 which can be disconnected. An engaging arm 36 can herein be lowered onto closing profiles 27 which are thus clamped against each other. The various hoses 31-33 and 19 are closed when impregnation is completed. Except for curing, there is now located in foil 9 a completed product which requires only curing of the curable liquid, for instance resin. Frame 22 of apparatus 21 does not however have to remain occupied for this purpose, and to this end couplings 35 are arranged. Before curing of the liquid, resin, the engaging arm 36 is therefore lowered onto closing profiles 27 which holds these profiles against each other. Engaging arm 36 can then be displaced laterally in the direction of arrow B, wherein the composite material still to be cured can be subjected to a treatment, for instance a heat treatment, which is indicated schematically with arrow C. In the meantime a new set of closing profiles 27 can be arranged on arms 25 of apparatus 21 by means of couplings 35, which are only represented schematically here in fig. 8. Apparatus 21 can thus be used continuously without having to wait for curing of the product manufactured therein. Already manufactured products are transported in the direction of arrow D to an unpacking station where foil 9 is removed so as to expose the upright 2. At the position of cover-like plate 20 a recess is then created with edges 7 as also shown in fig. 2. Only a hole need then be sawn in order to create closing opening 5 and to be left with flanges 6. A thickened portion 37 is formed as also shown in fig. 8 at the position where the cover-like plate 20 has been placed.

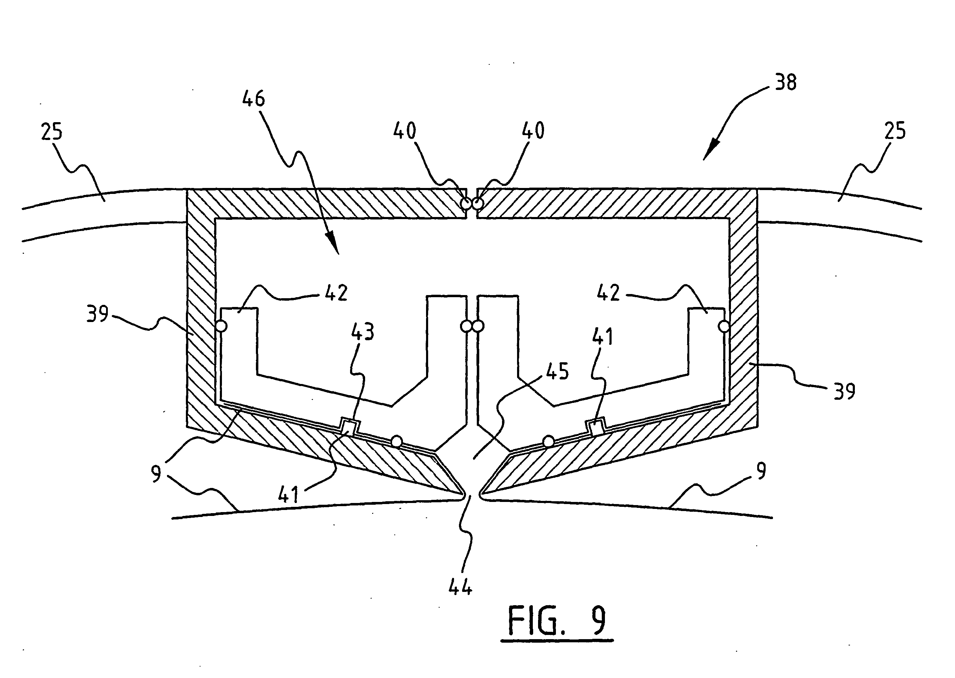

Fig. 9 shows an alternative configuration relative to fig. 6. Shown here is an alternative sealing system 38 where the H-shaped profile can be omitted and wherein a channel is simultaneously provided from the sealing profile for distribution of resin along the length of the light mast or lamppost being produced. The configuration 38 comprises closing profiles 39 which can be pressed against each other on the side remote from foil 9 with sealing means therebetween such as sealing strips 40, which can for instance take the form of cords of the same material as that from which O-rings are made. Foil 9 is herein provided with holes along the edge thereof, which holes have to be placed over pins 41, whereafter additional profiles 42 with recesses 43 can also be pressed onto pins 41, and closing profiles 39 are then pressed against each other. The additional profiles 42 also have sealing means or strips at various locations in order to effect a good sealing of the interior of the space enclosed by closing profiles 39 relative to the space in which is situated the glass fibre material that must be impregnated with the synthetic resin.

It is noted here that on the underside the closing profiles 39 do not fit fully against each other, i.e. on the side where the foil 9 runs out of the space formed by closing profiles 39. Here a passage 44 between closing profiles 39 is free for the flow of synthetic resin. Such an opening is for instance only 1 mm wide. Situated above this opening 44 is a channel 45 through which the synthetic resin can run or flow. At any random desired distance along the length of the light mast or upright to be formed synthetic resin can herein flow out of channel 45 through opening 44 in order to impregnate the glass fibre material located thereunder. A considerable simplification is thus provided compared to the previous embodiments, wherein an additional system is or was necessary in each case to bring about an adequate supply of synthetic resin.

It is further noted that a protective vacuum is deemed by the inventors to be necessary, or in any case desirable, in the space 46 formed by closing profiles 39, to the extent this space is closed off from channel 45 by the additional profiles 42.

The embodiment of fig. 9 can also be used in reverse sense to that described above. It is possible herein to create an underpressure in channel 45 and thus draw air out of the fibre material through opening 44. Another feed for curable liquid must then be provided. This can be realized for instance by a hose or other conduit which extends between the mould and the covering layer on the side opposite configuration 38. Curable liquid coming out of the hose or conduit is then drawn to configuration 38 to thus impregnate the fibre material. Such a hose or conduit can comprise outflow openings along the length thereof for a uniform distribution of the curable liquid over the length of the product for manufacturing, in particular an upright. A hose or conduit ejecting the curable liquid on the distal end thereof can also be retracted gradually along the length of the product for manufacturing in order to introduce a sufficient quantity of curable liquid into the fibre material along the length so as to bring about, on the basis of the underpressure in channel 45, complete impregnation of all the fibre material between the hose or conduit and the configuration 38.

After perusal of the foregoing many additional and alternative embodiments will occur to the skilled person, all of which however form part of the present invention unless such additional and alternative embodiments depart from the essence of the appended claims, in particular the independent claims. It is thus possible for the inflatable bag in the interior of the assembly shown in fig. 3 to be replaced by a conical tube or a solid element. The foil is described as flexible but can in addition display a predetermined degree of elasticity, although the flat form thereof is definitive in obtaining the final product. The degree of elasticity, to the extent known beforehand, can still result in readily reproducible products depending on the design and embodiment of the chosen means for deploying the flexible element etc. The field of application of the invention is also much wider than just lampposts and light masts. Posts for road signs or for traffic lights, direction signs and other uprights in general, and collision-safe uprights in traffic in particular, also fall within the invention. It is also possible to opt for a curable liquid which provides a transparent composite material. A light source or lamp can herein be arranged in the upright so as to increase the visibility of the upright with the light emitted therefrom.

## Claims

1. Method for impregnating a layer of fibre material with a curable liquid so as to obtain a product of composite material, in particular an upright such as a lamppost or light mast or a post for a traffic light, road sign or for a direction sign, comprising:
- providing a mould (9);
- arranging a layer of the fibre material (16) against a surface of the mould;
- arranging a covering layer (13) over the fibre material in order to enclose the layer of fibre material between the mould and the covering layer;
- providing the curable liquid; and
- applying an underpressure to the space defined by the mould and the covering layer in order to enhance distribution of the liquid through the layer of fibre material,
wherein the mould is formed by a flexible element (9) and the method further comprises of: deploying the flexible element in a desired form by arranging a pressure body on the side located opposite the flexible element relative to the layer of fibre material, so as to deploy the flexible element in the desired form while clamping the layer of fibre material,
**characterized in that**
deploying the flexible element in the desired form comprises: providing the flexible element in a predetermined flat form; and closing the flexible element around the pressure body while enclosing the layer of fibre material by connecting selected sides or edges of the flexible element onto each other.

2. Method as claimed in claim 1, wherein the pressure body is inflatable and the step of deploying the flexible element comprises of inflating the pressure body.

3. Method as claimed in claim 1, wherein the flat form of the flexible element is that of a parallelepiped.

4. Method as claimed in claim 3, comprising of mutually connecting two edges of the parallelepipedal flexible element which lie opposite each other, wherein the product is hollow and substantially conical or cylindrical, such as a lamppost.

5. Method as claimed in claims 2 and 4, wherein the pressure body is a substantially or approximately cylindrical elongate bag.

6. Method as claimed in at least one of the foregoing claims, wherein connecting of the sides or edges of the flexible element comprises of: arranging engaging or clamping means along these sides or edges, and energizing the engaging means or closing the clamping means.

7. Method as claimed in at least one of the claims, further comprising of arranging closing means at free sides or edges of the flexible element, at which free edges no engaging or clamping means are arranged.

8. Method as claimed in claim 6 or 7, wherein the engaging or clamping means are connected via at least one coupling (35) to a frame, and the method further comprises of: disconnecting the coupling with the liquid in a still uncured state after the impregnation and removing the clamping means from the frame for further treatment, for instance a heat treatment, of the layer of fibre material impregnated with the liquid in order to provide the product.

9. Method as claimed in at least one of the foregoing claims, further comprising of placing a plate with a hatch or cover form between the flexible element and the layer of fibre material in order to define at least a contour of an access opening in the outer surface of the product.

10. Apparatus for impregnating a layer of fibre material with a curable liquid so as to obtain a product of composite material, such as a lamppost or light mast, comprising:
- a mould formed by a flexible element (9) with a surface for arranging a layer of the fibre material (16) against said surface;
- a covering layer (13) arrangeable over the fibre material in order to enclose the layer of fibre material between the mould and the covering layer;
- means for providing the curable liquid;
- means for applying an underpressure to the space defined by the mould and the covering layer in order to enhance distribution of the liquid through the layer of fibre material;
- a pressure body for deploying the flexible element in a desired form by arranging said pressure body on the side located opposite the flexible element relative to the layer of fibre material, so as to deploy the flexible element in the desired form while clamping the layer of fibre material,
**characterized in that**
the apparatus comprises closing means for closing the flexible element provided in a predetermined flat form, around the pressure body while enclosing the layer of fibre material by connecting selected sides or edges of the flexible element onto each other.

## Patentansprüche

1. Verfahren zum Imprägnieren einer Schicht aus Fibermaterial mit einer aushärtbaren Flüssigkeit, um so ein Produkt eines Verbundmaterials zu erhalten, insbesondere einen Pfosten wie einen Lampenpfahl oder einen Lichtmasten oder einen Pfosten für eine Verkehrsampel, ein Straßenschild oder für ein Richtungsschild mit:
- Vorsehen einer Form (9);
- Anordnen einer Schicht des Fibermaterials (16) gegen eine Oberfläche der Form;
- Anordnen einer Deckschicht (13) über dem Fibermaterial, um die Schicht des Fibermaterials zwischen der Form und der Deckschicht einzuschließen;
- Zuführen der aushärtbaren Flüssigkeit; und
- Anlegen eines Unterdrucks an den Raum, der durch die Form und die Deckschicht begrenzt ist, um die Verteilung der Flüssigkeit durch die Schicht des Fibermaterials zu erhöhen, wobei die Form durch ein flexibles Element (9) gebildet ist und das Verfahren ferner aufweist: Ausbreiten des flexiblen Elementes in einer gewünschten Form durch Anordnung eines Druckkörpers auf der Seite, die dem flexiblen Element relativ zu der Schicht des Fibermaterials gegenüberliegt, derart, um das flexible Element in der gewünschten Form auszubreiten, während die Schicht des Fibermaterials geklemmt wird,
**dadurch gekennzeichnet, dass**
das Ausbreiten des flexiblen Elementes in der gewünschten Form aufweist: Vorsehen des flexiblen Elements in einer vorgegebenen flachen Form und Verschließen des flexiblen Elements um den Druckkörper herum mit Einschluss der Schicht des Fibermaterials durch Verbinden ausgewählter Seiten oder Kanten des flexiblen Elementes miteinander.

2. Verfahren nach Anspruch 1, wobei der Druckkörper aufblasbar ist und der Schritt des Ausbreitens des flexiblen Elements das Aufblasen des Druckkörpers umfasst.

3. Verfahren nach Anspruch 1, wobei die flache Form des flexiblen Elements die eines Parallelepipeds ist.

4. Verfahren nach Anspruch 3 mit dem gegenseitigen Verbinden zweier Kanten des parallelepipedförmigen Elementes, die einander gegenüberliegen, wobei das Produkt hohl und im Wesentlichen konisch oder zylindrisch wie ein Lampenpfosten ist.

5. Verfahren nach Anspruch 2 und 4, wobei der Druckkörper ein im Wesentlichen oder näherungsweise zylindrischer länglicher Schlauch ist.

6. Verfahren nach mindestens einem der vorstehenden Ansprüche, wobei das Verbinden der Seiten oder Kanten des flexiblen Elementes aufweist: das Anordnen von Eingriffs- oder Klemmmitteln entlang dieser Seiten oder Kanten und Betätigen der Eingriffsmittel oder Schließen der Klemmmittel.

7. Verfahren nach zumindest einem der Ansprüche, mit ferner der Anordnung von Verschlussmitteln an freien Seiten oder Kanten des flexiblen Elementes, wobei an den freien Kanten keine Eingrifss- oder Klemmmittel angeordnet sind.

8. Verfahren nach Anspruch 6 oder 7, wobei die Eingriffs- oder Klemmmittel über zumindest eine Kupplung (35) mit einem Rahmen verbunden sind und wobei das Verfahren ferner aufweist: Lösen der Kupplung, wobei die Flüssigkeit in einem noch nicht ausgehärteten Zustand ist, nach dem Imprägnieren und Entfernen der Klemmmittel von dem Rahmen für eine weitere Behandlung, zum Beispiel einer Wärmebehandlung, der Schicht des Fibermaterials, die mit der Flüssigkeit imprägniert ist, um das Produkt zu liefern.

9. Verfahren nach zumindest einem der vorstehenden Ansprüche mit ferner dem Anordnen einer Platte mit einer Muster- oder Abdeckform zwischen dem flexiblen Element und der Schicht des Fibermaterials, um zumindest eine Kontur einer Zugriffsöffnung in der äußeren Fläche des Produktes zu definieren.

10. Vorrichtung zum Imprägnieren einer Schicht aus Fibermaterial mit einer aushärtbaren Flüssigkeit, um so ein Produkt aus Verbundmaterial zu erhalten, beispielsweise einen Lampenpfosten oder Lichtmasten, mit:
- einer Form, die durch ein flexibles Element (9) mit einer Oberfläche ausgebildet ist, zum Anordnen einer Schicht des Fibermaterials (16) gegen diese Oberfläche,
- einer Deckschicht (13), die über dem Fibermaterial angeordnet werden kann, um die Schicht des Fibermaterials zwischen der Form und der Deckschicht einzuschließen,
- Mittel zum Zuführen der aushärtbaren Flüssigkeit,
- Mittel zum Anlegen eines Unterdruckes an dem Raum, der durch die Form und die Deckschicht definiert ist, um die Verteilung der Flüssigkeit durch die Schicht des Fibermaterials zu erhöhen,
- einem Druckkörper zum Ausbreiten des flexiblen Elementes in einer gewünschten Form durch Anordnen des Druckkörpers an der Seite, die gegenüberliegend des flexiblen Elementes relativ zu der Schicht des Fibermateriales liegt, um so das flexible Element in der gewünschten Form auszubreiten, während die Schicht des Fibermaterials geklemmt wird,
**dadurch gekennzeichnet, dass**
die Vorrichtung Verschlussmittel aufweist zum Schließen des flexiblen Elementes, das in einer vorgegebenen flachen Form vorgesehen ist, um den Druckkörper mit Einschluss der Schicht des Fibermaterials durch Verbinden ausgewählter Seiten oder Kanten des flexiblen Elements miteinander.

## Revendications

1. Procédé pour imprégner une couche de matériau fibreux avec un liquide durcissable de manière à obtenir un produit de matériau composite, en particulier une colonne, telle qu'un lampadaire ou un poteau de réverbère ou un montant pour feu de signalisation, panneau de signalisation ou panneau de direction, comprenant les étapes consistant à :
- mettre en oeuvre un moule (9) ;
- aménager une couche du matériau fibreux (16) contre une surface du moule ;
- aménager une couche de revêtement (13) par-dessus le matériau fibreux afin d'inclure la couche de matériau fibreux entre le moule et la couche de revêtement ;
- délivrer le liquide durcissable ; et
- appliquer une dépression à l'espace défini par le moule et la couche de revêtement afin de renforcer la distribution du liquide au travers de la couche de matériau fibreux,
dans lequel le moule est formé d'un élément flexible (9) et le procédé comprend en outre le déploiement de l'élément flexible sous une forme souhaitée en agençant un corps de pression sur le côté situé à l'opposé de l'élément flexible par rapport à la couche de matériau fibreux de manière à déployer l'élément flexible sous la forme souhaitée en bloquant la couche de matériau fibreux,
**caractérisé en ce que**
le déploiement de l'élément flexible sous la forme souhaitée comprend les étapes consistant à fournir l'élément flexible sous une forme plate prédéterminée ; et à fermer l'élément flexible autour du corps de pression tout en confinant la couche de matériau fibreux en raccordant des côtés ou des bords choisis de l'élément flexible l'un sur l'autre.

2. Procédé selon la revendication 1, dans lequel le corps de pression est gonflable et l'étape de déploiement de l'élément flexible comprend le gonflage du corps de pression.

3. Procédé selon la revendication 1, dans lequel la forme plate de l'élément flexible est celle d'un parallélépipède.

4. Procédé selon la revendication 3 comprenant le raccordement mutuel de deux bords de l'élément flexible parallélépipédique qui sont opposés l'un à l'autre, dans lequel le produit est creux et sensiblement conique ou cylindrique, comme un lampadaire.

5. Procédé selon les revendications 2 et 4, dans lequel le corps de pression est un sac allongé sensiblement ou approximativement cylindrique.

6. Procédé selon au moins l'une des revendications précédentes, dans lequel le raccordement des côtés ou des bords de l'élément flexible comprend l'aménagement de moyens d'engagement ou de blocage le long de ces côtés ou de ces bords et l'activation des moyens d'engagement ou la fermeture des moyens de blocage.

7. Procédé selon l'une quelconque des revendications, comprenant en outre l'aménagement de moyens de fermeture sur des côtés ou des bords libres de l'élément flexible, sur lesquels bords libres il n'y a pas de moyens d'engagement ou de moyens de blocage.

8. Procédé selon la revendication 6 ou 7, dans lequel les moyens d'engagement ou de blocage sont raccordés, via au moins un couplage (35), à un cadre et le procédé comprend en outre le désassemblage du couplage avec le liquide encore à l'état non durci après l'imprégnation et le retrait des moyens de blocage du cadre pour une autre traitement, par exemple un traitement thermique, de la couche de matériau fibreux imprégné du liquide afin d'obtenir le produit.

9. Procédé selon au moins l'une quelconque des revendications précédentes, comprenant en outre la mise en place d'une plaque en forme de trappe ou de couvercle entre l'élément flexible et la couche de matériau fibreux afin de définir au moins un contour d'une ouverture d'accès dans la surface externe du produit.

10. Appareil pour imprégner une couche de matériau fibreux avec un liquide durcissable de manière à obtenir un produit de matériau composite, comme un lampadaire ou un poteau de réverbère, comprenant :
- un moule formé d'un élément flexible (9) avec une surface pour agencer une couche du matériau fibreux (16) contre ladite surface ;
- une couche de revêtement (13) qui peut être agencée par-dessus le matériau fibreux afin de confiner la couche de matériau fibreux entre le moule et la couche de revêtement ;
- des moyens pour délivrer le liquide durcissable ;
- des moyens pour appliquer une dépression à l'espace défini par le moule et la couche de revêtement afin de renforcer la distribution du liquide au travers de la couche de matériau fibreux ;
- un corps de pression pour déployer l'élément flexible sous une forme souhaitée en agençant ledit corps de pression sur le côté situé à l'opposé de l'élément flexible par rapport à la couche de matériau fibreux de manière à déployer l'élément flexible sous la forme souhaitée tout en bloquant la couche de matériau fibreux ;
**caractérisé en ce que**
l'appareil comprend des moyens de fermeture pour fermer l'élément flexible fourni sous une forme plate prédéterminée autour du corps de pression, tout en confinant la couche de matériau fibreux en raccordant des côtés ou des bords choisis de l'élément flexible l'un sur l'autre.
